(19) Europäisches Patentamt
European Patent Office
Office européen des brevets

(11) **EP 4 737 951 A1**

(12) **EUROPEAN PATENT APPLICATION**

(43) Date of publication:
**06.05.2026 Bulletin 2026/19**

(21) Application number: **25211309.7**

(22) Date of filing: **27.10.2025**

(51) International Patent Classification (IPC):
***G01W 1/14*** *(2006.01)*

(52) Cooperative Patent Classification (CPC):
**G01W 1/14**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **31.10.2024 US 202418934031**

(71) Applicant: **FUJITSU LIMITED**
**Kawasaki-shi, Kanagawa 211-8588 (JP)**

(72) Inventors:
• **USHIJIMA-MWESIGWA, Hayato**
**Sunnyvale, California 94085 (US)**
• **WONG, Hon Yung**
**Sunnyvale, California 94085 (US)**
• **DAI, Ting-Yu**
**Sunnyvale, California 94085 (US)**

(74) Representative: **Hoffmann Eitle**
**Patent- und Rechtsanwälte PartmbB**
**Arabellastraße 30**
**81925 München (DE)**

(54) **PRECIPITATION DOWNSCALING WITH LIMITED GROUND-OBSERVATION DATA**

(57) A method to train a diffusion model for satellite observation precipitation data downscaling may include obtaining high-resolution (HR) ground observation precipitation data that has a first resolution. The method may include obtaining corresponding low-resolution (LR) satellite observation precipitation data that has a second resolution lower than the first resolution. The method may include upsampling the LR satellite observation precipitation data that has the second resolution to generate upsampled satellite observation precipitation data that has the first resolution. The method may include generating training residuals from the HR ground observation precipitation data and the corresponding upsampled satellite observation precipitation data. The method may include adding noise to the training residuals. The method may include de-noising the noisy training residuals using a diffusion model to generate predicted residuals. The method may include updating the diffusion model using a loss function that depends on the training residuals and the predicted residuals.

FIG. 1

**Description**

**FIELD**

The present disclosure generally relates to precipitation downscaling with limited ground-observation data.

**BACKGROUND**

Accurate and timely precipitation data is essential for many applications, including early warning systems for natural disasters, local water management, and agricultural planning. However, ground-based weather observation equipment like weather surveillance radar (WSR) is often lacking in remote or developing areas due to its high cost. For example, while the United States and Europe combined have over 600 WSRs, Africa has fewer than 40 despite having almost one and a half times their landmass.

The subject matter claimed in the present disclosure may not be limited to embodiments that solve any disadvantages or that operate only in environments such as those described above. Rather, this background may be only provided to illustrate one example technology area where some embodiments described in the present disclosure may be practiced.

**SUMMARY**

In an example embodiment, a method to train a diffusion model for satellite observation precipitation data downscaling may include obtaining high-resolution (HR) ground observation precipitation data that has a first resolution. The method may include obtaining corresponding low-resolution (LR) satellite observation precipitation data that has a second resolution lower than the first resolution. The method may include upsampling the LR satellite observation precipitation data that has the second resolution to generate upsampled satellite observation precipitation data that has the first resolution. The method may include generating training residuals from the HR ground observation precipitation data and the corresponding upsampled satellite observation precipitation data. The method may include adding noise to the training residuals. The method may include de-noising the noisy training residuals using a diffusion model to generate predicted residuals. The method may include updating the diffusion model using a loss function that depends on the training residuals and the predicted residuals.

The object and advantages of the embodiments will be realized and achieved at least by the elements, features, and combinations particularly pointed out in the claims. It is to be understood that both the foregoing general description and the following detailed description are explanatory and are not restrictive of the invention, as claimed.

**BRIEF DESCRIPTION OF THE DRAWINGS**

Example embodiments will be described and explained with additional specificity and detail through the accompanying drawings in which:

FIG. 1 illustrates an example system 100 for weather data processing;
FIG. 2A illustrates an example process flow to train a diffusion model for satellite data downscaling;
FIG. 2B illustrates a flowchart of an example method to train the diffusion model for satellite data downscaling;
FIG. 3A illustrates an example process flow to downscale satellite data;
FIG. 3B illustrates a flowchart of an example method to downscale satellite data;
FIG. 4A illustrates an example process flow to train a diffusion regression model for satellite data bias correction;
FIG. 4B illustrates an example process flow to fine-tune the pretrained diffusion regression model of FIG. 4A for satellite data bias correction;
FIG. 4C illustrates a flowchart of an example method to train the diffusion regression model for satellite data bias correction;
FIG. 5A illustrates an example process flow to bias correct satellite data;
FIG. 5B illustrates a flowchart of an example method to bias correct satellite data;
FIG. 6 compares error distributions of original and corrected IMERG data relative to LR MRMS data;
FIG. 7 compares error distributions of LR MRMS and downscaled MRMS relative to HR MRMS;
FIG. 8 illustrates results of applying bias correction and downscale models sequentially to downscale IMERG data to the resolution of MRMS observations, showcasing detailed cloud-like formations and precipitation patterns;
FIG. 9 compares error distributions of IMERG, bias corrected IMERG, and downscaled IMERG relative to MRMS data;
FIG. 10 shows results of application of a downscale model trained using data from Seattle to data from, respectively, New York, San Jose, and Portland;

FIG. 11 shows results of application of a bias correction model trained using data from Seattle to data from, respectively, New York, San Jose, and Portland; and

FIG. 12 illustrates a block diagram of an example computing system, in accordance with one or more embodiments of the present disclosure.

## DETAILED DESCRIPTION

Water-related disasters, such as landslides, floods, and droughts, may constitute a significant majority of natural disasters. The past five decades have witnessed over 11,000 reported weather-related disasters globally, tragically claiming over two million lives and inflicting $3.64 trillion in economic losses. Developing countries disproportionately bear this burden, accounting for over 91% of these fatalities. However, advancements in early warning systems and disaster management have yielded a nearly threefold reduction in fatalities between 1970 and 2019, underscoring the life-saving potential of technological progress.

Precipitation monitoring forms a cornerstone of effective early warning systems, proving crucial for forecasting and mitigating weather-related hazards. Weather surveillance radar (WSR) systems offer high-resolution data on precipitation intensity and distribution, invaluable for short-term forecasting and nowcasting. However, the cost of WSRs, often reaching millions of dollars per unit, leads to uneven global distribution. For example, the U.S. and Europe, with a combined population of roughly 1 billion, possesses nearly 700 WSRs. In stark contrast, Africa, with a larger population and a landmass more than 1.5 times, operates fewer than 40 WSRs.

Satellite-based precipitation products (SPPs) offer an alternative, providing continuous spatiotemporal estimation with global coverage. Products such as the Tropical Rainfall Measuring Mission (TRMM), the Climate Prediction Center Morphing Technique (CMORPH), the Global Precipitation Measurement (GPM) mission, and Global Satellite Mapping of Precipitation (GSMap), along with advancements like the Integrated Multi-satellite Retrievals for GPM (IMERG), have improved precipitation monitoring capabilities.

However, SPPs still face challenges. Their indirect estimation nature, coupled with limitations in spatiotemporal sampling, instrument capabilities, and retrieval algorithms, lead to biases and relatively low accuracy. Comprehensive evaluation and bias correction may therefore be crucial, especially for early warning systems. Furthermore, the coarse spatial resolution of current SPPs (typically 0.1° or lower) may limit their applicability in urban settings where finer resolutions may be required.

Therefore, it may be beneficial to address one or more of at least two challenges: bias and poor spatial resolution. Accordingly, one or more embodiments herein may involve training one or more diffusion models for bias correction and/or downscaling of satellite observation precipitation data (e.g., SPPs). Alternatively or additionally, one or more embodiments herein may involve using the diffusion model(s) for bias correction and/or downscaling of satellite observation precipitation data.

Embodiments of the present disclosure are explained with reference to the accompanying figures. The embodiments described are intended to illustrate, and not limit, the invention. The drawings are not necessarily to scale, and certain features may be exaggerated or minimized to show details of particular components. In some instances, well-known components, systems, materials, or methods have not been described in detail in order to avoid obscuring the present disclosure. Therefore, the following detailed description is not to be taken in a limiting sense.

The present disclosure describes methods and systems for correcting bias in satellite-based precipitation data and/or downscaling low-resolution satellite-based precipitation data to higher resolution estimates using machine learning techniques, specifically diffusion models. The disclosed techniques can remove bias and/or improve the spatial resolution and accuracy of satellite precipitation products, making them more useful for local applications such as flood forecasting, water resource management, and agricultural planning.

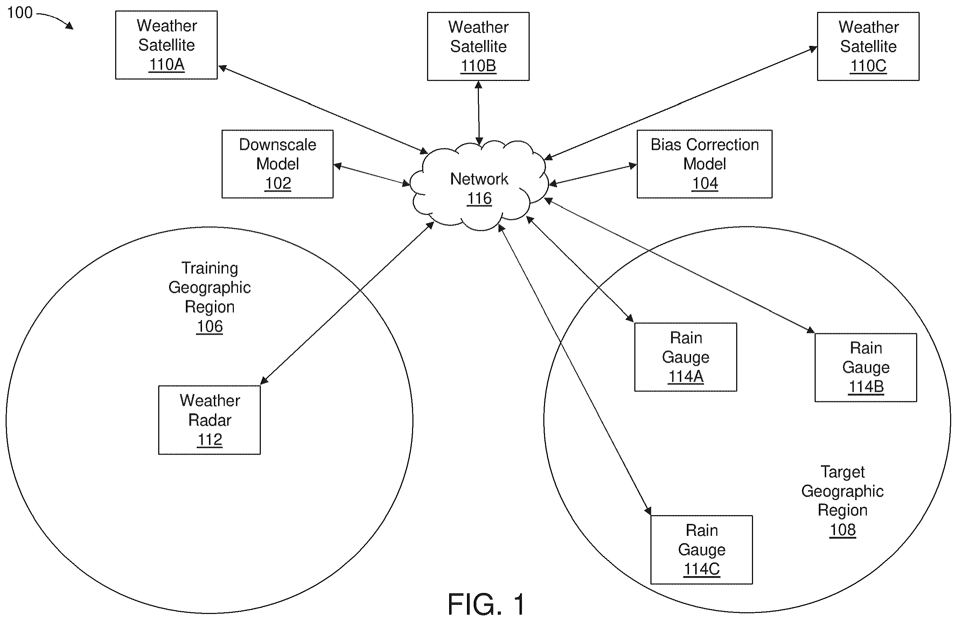

FIG. 1 illustrates an example system 100 for weather data processing in accordance with one or more embodiments of the present disclosure. The system 100 includes a downscale model 102 and a bias correction model 104. The models 102, 104 may be implemented as machine learning models, such as diffusion models, trained to process precipitation data as described herein. One or each of the models 102, 104 may include an equivariant diffusion model (EDM) and/or a denoising diffusion probabilistic model (DDPM) that employs two Markov chains: a forward process that gradually injects noise into the data and a reverse process that learns to progressively remove noise to recover the original data distribution. Each model 102, 104 may be both an EDM and a DDPM or only an EDM.

In an example implementation in which each model 102, 104 is a DDPM (and an EDM), formally, given a data distribution $x_0 \sim q(x_0)$, the forward Markov process may generate a sequence of random variables $x_1, \ldots, x_T$ with transition kernel $q(x_t | x_{t-1})$. Leveraging the Markov property, the joint distribution may be given by Equation 1:

$$q(x_1, \ldots, x_T) = \prod_{t=1}^{T} q(x_t | x_{t-1}) \qquad \text{Equation 1}$$

In DDPMs, the transition kernel may be defined according to Equation 2:

$$q(x_t|x_{t-1}) = \mathcal{N}(x_t; \sqrt{1-\beta_t}x_{t-1}, \beta_t I) \qquad \text{Equation 2}$$

where $\beta_t \in (0, 1)$ is a hyperparameter that controls the variance schedule. This forward process gradually adds noise to the original data until it becomes essentially pure noise.

To generate new data samples, a noise vector may first be sampled from the prior distribution. The reverse process, parameterized by a prior distribution $p(x_T) = \mathcal{N}(x_T; \textbf{0, I})$ and a learnable transition kernel $p_\theta(x_{t-1}|x_t)$, then gradually removes the noise. This transition kernel for the reverse process may be defined according to equation 3:

$$p_\theta(x_{t-1}|x_t) = \mathcal{N}(x_{t-1}; \mu_0(x_t, t), \textstyle\sum_\theta(x_t, t)) \qquad \text{Equation 3}$$

where $\theta$ represents the model parameters, and the mean $\mu_\theta(x_t t)$ and variance $\Sigma_\theta(x_t t)$ are parameterized by deep neural networks.

In an example, one or both of the models 102, 104 (whether implemented as a DDPM as described above or otherwise) may be trained using precipitation data for a training geographic region 106 and may then be applied to correct biases and/or downscale data for a target geographic region 108.

The system 100 may receive or obtain data from multiple sources, including one or more weather satellites 110A, 110B, 110C (collectively and/or generically hereinafter "weather satellite 110" or "weather satellites 110"), one or more weather radars 112 (and/or other WSRs), and/or one or more rain gauges 114A, 114B, 114C (collectively and/or generically hereinafter "rain gauge 114" or "rain gauges 114").

The weather satellites 110A, 110B, and 110C generate satellite observation precipitation data as a measurement of precipitation in a given geographic area, which may be referred to as "satellite data" and/or which may include one or more SPPs. Such satellite data may have a low resolution (LR), such as a spatial resolution of about 10 kilometers (km) by 10 km in an embodiment, and/or may cover large geographic areas. The satellite data may be obtained for the downscale model 102 and/or the bias correction model 104 from the weather satellites 110 via a network 116, e.g., directly and/or through one or more intermediary resources or entities within or communicatively coupled to the network 116.

The weather radar 112 (and/or other WSRs) generates ground observation precipitation data as another measurement of precipitation in a given geographic area, which may be referred to as "ground data". Such ground data may have a high resolution (HR), such as a spatial resolution of about 1 km by 1 km in an embodiment, and/or may cover smaller geographic areas than the satellite data. The ground data may be obtained for the downscale model 102 and/or the bias correction model 104 from the weather radar 112 via the network 116, e.g., directly and/or through one or more intermediary resources or entities within or communicatively coupled to the network 116. The ground data may be considered ground truth in the training geographic region 106.

Specific resolutions have been provided by way of example for satellite data (e.g., 10 km) and ground data (e.g., 1 km). More generally, the satellite data may have a lower resolution than the ground data irrespective of the specific resolution of either one.

The rain gauges 114 (and/or other WSRs) generate limited ground observation precipitation data as yet another measurement of precipitation in a given geographic area, which may be referred to as "limited ground data". Such limited ground data may be or include HR data with the same or even higher resolution than the ground data generated by the weather radar 112, such as on the order of centimeters. Such limited ground data may cover or apply to even smaller areas than the weather radar 112, e.g., on the order of square centimeters. The ground data may be obtained for the downscale model 102 and/or the bias correction model 104 from the rain gauges 114 via the network 116, e.g., directly and/or through one or more intermediary resources or entities within or communicatively coupled to the network 116. The limited ground data may also be considered ground truth in the target geographic region 108.

Although not depicted in FIG. 1, in some embodiments the training geographic region 106 may include one or more rain gauges 114. In this and other embodiments, the limited ground data collected from the one or more rain gauges 114 in the training geographic region 114 may also be considered ground truth in the training geographic region. In some embodiments, the limited ground data may be used to fine-tune one or both of the models 102, 104 and/or to improve downscaling accuracy and/or bias correction for the target geographic region 108.

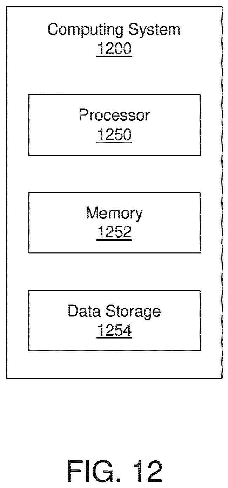

The models 102, 104 may be implemented in, on, with, or by one or more computing resources, such as in a cloud computing environment, a server computer, a client computer, or other computing system. Such computing resources may include one or more of a processor, memory, data storage, and/or other computing resources. Some example computing resources implemented in an example computing system are described in more detail with respect to FIG. 12.

At a high level, each of the downscale model 102 and the bias correction model 104 may be trained on satellite data, ground data, and/or limited ground data of the training geographic region 106. Alternatively or additionally, the bias correction model 104 may be fine-tuned on satellite data and/or limited ground data of the target geographic region 108. After the models 102, 104 have been trained and/or fine-tuned, satellite data for the target geographic region 108 may be input into the bias correction model 104 to reduce systematic errors in bias-corrected satellite data. The bias-corrected satellite data may then be processed by the downscale model 102 to generate HR precipitation estimates. The limited ground data from the target geographic region 108 may be incorporated to further refine the results.

In some embodiments, and rather than the models 102, 104 directly learning and generating bias-corrected satellite data and/or HR precipitation estimates, the models 102, 104 may learn and generate residual differences, e.g., between LR and HR data. Direct HR generation using diffusion models often results in a loss of intensity and detail in cloud formations and weather fronts. Instead, either or both of the models 102, 104 may be trained to generate residuals, conditioned on the LR data, using an EDM scheduler and sampler. These residuals may then be added to, e.g., corresponding interpolated LR data to obtain downscaled precipitation data, e.g., HR precipitation estimates as referenced earlier. A classic U-Net architecture or other architecture may be employed for denoising the noisy residuals based on the EDM noise scheduling algorithm. An assumption in this residual training approach is the availability of high-quality LR data as a foundation.

Some embodiments herein address two tasks: bias correction and downscaling.

The bias correction task (as implemented, at least in part, by the bias correction model 104) aims to mitigate discrepancies between satellite data and ground data, which may arise from differences in measurement techniques and processing algorithms. In some embodiments, the bias correction model 104 is trained on residuals calculated by subtracting satellite data from ground data or by subtracting ground data from satellite data. Insofar as the ground data may generally have a higher resolution than the satellite data, the ground data may be coarsened, e.g., downsampled to match the resolution of the satellite data, or otherwise processed to have a same resolution as the satellite data, before being used in training. The satellite data may be used as conditioning information to guide the denoising of noisy residuals.

For the downscaling task (as implemented, at least in part, by the downscale model 102), LR satellite data may first be upsampled to a same resolution as HR ground data, creating a HR representation (albeit of LR quality). Residuals may then be calculated by comparing the upsampled LR satellite data with the ground data, e.g., by subtracting the upsampled LR satellite data from the ground data. The same or similar residual diffusion learning process as implemented for training the bias correction model 104 may be applied to train the downscale model 102, with the upsampled LR satellite data serving as conditioning information for training the bias correction model 104.

In an example implementation of an inference phase involving both models 102, 104, satellite data is calibrated, or bias corrected, using the trained bias correction model 104. The bias-corrected satellite data may then be upsampled to 1 km resolution (or more generally a same resolution as ground data), e.g., using linear interpolation, and fed as conditioning information to the downscale model 102. The downscale model 102 generates a residual, which may be added to the upsampled bias-corrected data to produce the HR precipitation estimate. This pipeline may enable the generation of corrected and downscaled satellite precipitation data in real-time, with accuracy comparable to radar products and at the same spatial resolution despite the absence of any radar in the target geographic region.

The bias correction model 104 may learn to synthesize a distribution difference between LR satellite data and coarsened ground data. This may address the inherent bias between satellite data and ground data due to their different measurement principles and locations. The bias correction model 104 may effectively correct this systematic bias, aligning satellite data more closely with ground data. To achieve this, the ground data may be first coarsened to a same resolution as the satellite data using maximum value interpolation (or other process) to preserve precipitation intensity. Residual training may then be applied using the coarsened ground data and the corresponding satellite data.

The same or different residual training strategy as used to train the bias correction model 104 may be employed to train the downscale model 102. The downscale model 102 may be trained on the residual between upsampled LR satellite data and corresponding HR ground data, aiming to capture fine-scale details present in the ground data. The upsampled LR satellite data may serve as conditioning information, guiding the downscale model 102 to generate the denoised residual. In some embodiments, the downscale model 102 operates independently of the bias correction model 104, as the bias-corrected satellite data may still exhibit differences compared to coarsened ground data.

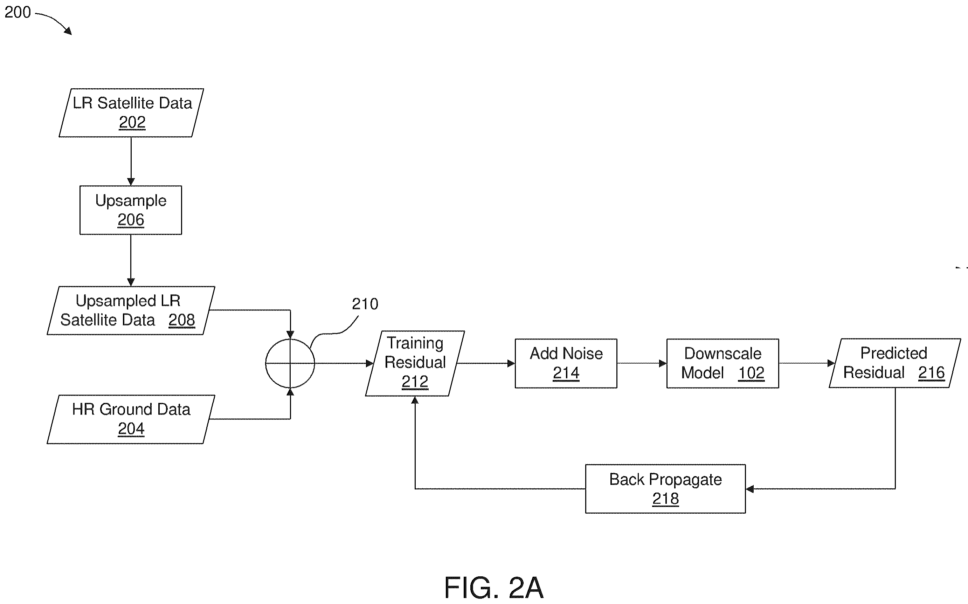

FIG. 2A illustrates an example process flow 200 to train the downscale model 102, or more generally a diffusion model, for satellite data downscaling in accordance with one or more embodiments of the present disclosure. The process flow 200 may be implemented on or by a computing system, such as the computing system of FIG. 12, using a diffusion model (such as the downscale model 102). The process flow 200 begins with LR satellite data 202 and corresponding HR ground data 204 for a training geographic region, such as the training geographic region 106 of FIG. 1. The LR satellite data 202 and the HR ground data 204 may be obtained from, respectively, one or more of the weather satellites 110 and the weather radar 112 and may be for the training geographic region 106 of FIG. 1. Alternatively or additionally, limited ground data may be obtained from one or more rain gauges in the training geographic region and may be used in the process flow 200.

At block 206, the LR satellite data 202 may be upsampled to match the resolution of the HR ground data, producing upsampled LR satellite data 208. The upsampled LR satellite data 208 may be low resolution in quality but may have a higher pixel count or resolution than the LR satellite data 202. For example, each pixel in the LR satellite data 202 may correspond to a different 10 km area (e.g., 10 km by 10 km area) in the training geographic region whereas each pixel in the upsampled LR satellite data 208 (as well as in the HR ground data 204) may correspond to a different 1 km area (e.g., 1 km by 1 km area) in the training geographic region, resulting in 100 1 km pixels in the upsampled LR satellite data 208 for each 10 km pixel in the LR satellite data 208. However, each of the 100 1 km pixels in the upsampled LR satellite data 208 that correspond to a given 10 km pixel in the LR satellite data 202 may have a same value as the given 10 km pixel such that the upsampled LR satellite data 208 is still LR in quality despite having a higher resolution than the LR satellite data 202.

At 210, a training residual 212 is generated from the HR ground data 204 and the corresponding upsampled LR satellite data 208. Each training residual 212 may be generated by subtracting the upsampled LR satellite data 208 for a given location (e.g., the training geographic region) and time from the HR ground data 204 for the given location and time or by subtracting the HR ground data 204 for the given location and time from the upsampled LR satellite data 208 for the given location and time. The subtraction may occur on a pixel-by-pixel basis.

At block 214, noise is added to the training residual 212. Adding noise to the training residual 212 may include adding Gaussian noise to the training residual 212. Noise may be added iteratively over T frames in some embodiments.

After adding noise at block 214, the downscale model 102 receives the noisy training residual and de-noises it to generate a predicted residual 216. The noisy training residual may be de-noised iteratively over T frames in some embodiments.

At block 218, back propagation is performed using a loss or error function to adjust learnable or model parameters of the downscale model 102. The learnable parameters may include or be included in, e.g., the transition kernel of the forward or reverse process as described above.

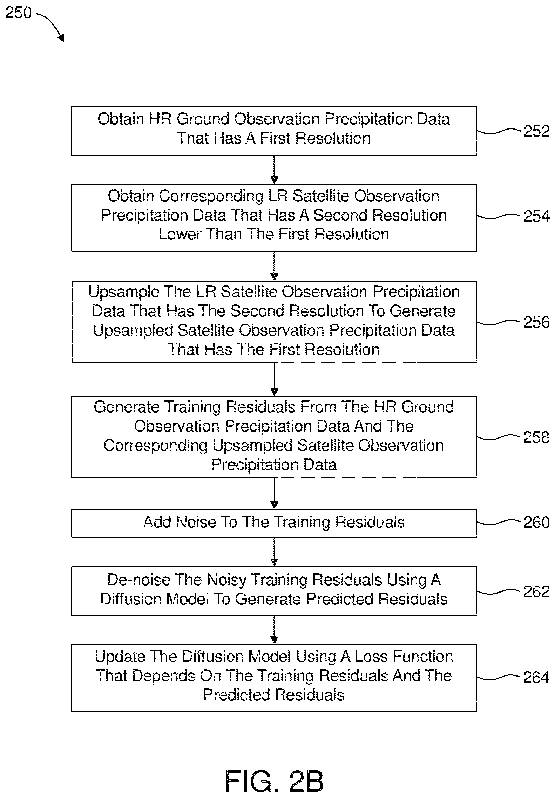

FIG. 2B illustrates a flowchart of an example method 250 to train the downscale model 102, or more generally a diffusion model, for satellite data downscaling in accordance with one or more embodiments of the present disclosure. The method 250 may include some or all of the process flow 200 of FIG. 2A. The method 250 may be performed or controlled by any suitable system, apparatus, or device. For example, the method 250 may be implemented in the system 100 using the downscale model 102 of FIG. 1 and/or using the computing system of FIG. 12. Alternatively or additionally, the method 250 may be embodied in computer-readable instructions stored on a computer-readable storage medium, the computer-readable instructions executable by a processor to perform or control performance of the method 250. The method 250 may include one or more of blocks 252, 254, 256, 258, 260, 262, and/or 264. Although illustrated with discrete blocks, the steps and operations associated with one or more blocks of the method 250 may be divided into additional blocks, combined into fewer blocks, or eliminated, depending on the particular implementation. For example, one or more of the operations described above with respect to the process flow 200 of FIG. 2A may be performed as part of the method 250 of FIG. 2B.

At block 252, the method 250 may include obtaining HR ground observation precipitation data that has a first resolution. The HR ground data may be for a training geographic region, such as the training geographic region 106 of FIG. 1. Block 252 may be followed by block 254.

At block 254, the method 250 may include obtaining LR satellite observation precipitation data that has a second resolution lower than the first resolution. The LR satellite data may be for the training geographic region, such as the training geographic region 106 of FIG. 1. The LR satellite data may correspond to the HR ground data in that both may be for the same given geographic region (e.g., the training geographic region 106) and time. Block 254 may be followed by block 256.

At block 256, the method 250 may include upsampling the LR satellite data that has the second resolution to generate upsampled satellite data that has the first resolution. While the upsampled satellite data may have the first resolution, it may nevertheless have the same low quality of the second resolution as described elsewhere herein. Block 256 may be followed by block 258.

At block 258, the method 250 may include generating training residuals from the HR ground data and the corresponding upsampled satellite data. Generating the training residuals based on the HR ground data and the corresponding upsampled satellite data at block 258 may include, for each training residual, subtracting the upsampled satellite data for a given location and time from the HR ground data for the given location and time or subtracting the HR ground data for the given location and time from the upsampled satellite data for the given location and time. Block 258 may be followed by block 260.

At block 260, the method 250 may include adding noise to the training residuals. Adding noise at block 260 may include iteratively adding noise, e.g., T times. Block 260 may be followed by block 262.

At block 262, the method 250 may include de-noising the noisy training residuals using a diffusion model to generate predicted residuals. The diffusion model may be or include the downscale model 102 of FIG. 1, for instance. Block 262 may be followed by block 264.

At block 264, the method 250 may include updating the diffusion model using a loss function that depends on the training residuals and the predicted residuals. The loss function may include a weighted mean square error (MSE) loss function and updating the diffusion model using the loss function may include backpropagating loss using the weighted MSE loss function. As an example, the weighted MSE loss function may be defined according to equation 4:

$$weightedMSE = \frac{1}{n}\sum_{i=1}^{n} \alpha_i(y_i - \widehat{y_i})\widehat{\phantom{x}}2 \qquad \text{Equation 4}$$

In equation 4, *weightedMSE* is the weighted MSE, *n* is a number of predicted values, $\alpha$ is a weighting factor, *y* is a known observed value, *ŷ* is a predicted value, and *i* is an index from 1 to *n* where each value identifies a different known value and corresponding predicted value. By using a weighting MSE loss function, a large weight may be given to regions with a high confidence of the ground data. For example, if the HR ground data 204 of FIG. 2A includes or is combined with rain gauge data, a first pixel corresponding to an area that includes the rain gauge may have a largest weight, pixels adjacent to the first pixel may have a smaller but still large weight, with further reduced weight assigned to pixels further from the first pixel.

In some embodiments, backpropagating loss, e.g., as part of block 264, may include one or more of the following for each training residual and corresponding predicted residual. For example, an error value may be calculated based on the training residual and the corresponding predicted residual. The contribution of each of multiple learnable parameters of the diffusion model to the error value may be determined. The learnable parameters may be updated, e.g., incrementally adjusted, based on the weighted MSE loss function.

The HR ground data and the LR satellite data used to train the diffusion model may correspond to a training geographic region. In particular, the HR ground data and the LR satellite data used to train the diffusion model may be measurements or data of the training geographic region, which may include the training geographic region 106 in. In these and other embodiments, the method 250 may further include downscaling satellite data corresponding to a target geographic region that is different from the training geographic region using the trained diffusion model. The target geographic region may include the target geographic region 108 of FIG. 1.

In some embodiments, downscaling the satellite data may include inputting noisy combined upsampled precipitation data of the target geographic region into the diffusion model to generate a downscaled residual. The noisy combined upsampled precipitation data may include a combination of LR satellite data and limited ground data for the target geographic region to which noise has been added. Combining the LR satellite data and the limited ground data may include applying an inverse distance weighting algorithm. Downscaling the satellite data may further include combining the downscaled residual with the combined upsampled precipitation data to produce a HR precipitation estimate for the target geographic region.

In some embodiments, the LR satellite data for the target geographic region includes bias-corrected LR satellite data for the target geographic region and the method 250 further includes, prior to inputting the noisy combined upsampled precipitation data of the target geographic region into the diffusion model, generating the bias-corrected LR satellite data for the target geographic region. Generating the bias-corrected LR satellite data may include inputting non-bias-corrected LR satellite data for the target geographic region into a bias correction diffusion model (e.g., the bias correction model 104 of FIG. 1) to generate a bias correction residual and combining the bias correction residual with the non-bias-corrected LR satellite data for the target geographic region to produce the bias-corrected LR satellite observation precipitation data for the target geographic region.

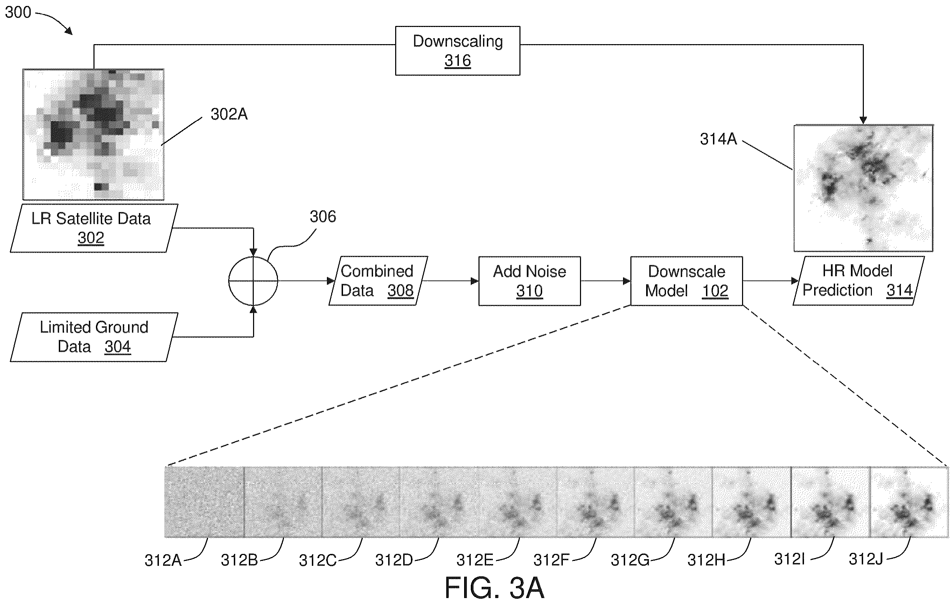

FIG. 3A illustrates an example process flow 300 to downscale satellite data in accordance with one or more embodiments of the present disclosure. The process flow 300 may be implemented on or by a computing system, such as the computing system of FIG. 12, using a diffusion model (such as the downscale model 102). The process flow 300 begins with LR satellite data 302 and corresponding limited ground data 304 for a target geographic region. For example, the LR satellite data 302 and the limited ground data 304 may be obtained from, respectively, one or more of the weather satellites 110 and the rain gauge(s) 114 and may be for the target geographic region 108 of FIG. 1. FIG. 3A depicts an example frame 302A of the LR satellite data 302.

At 306, combined upsampled precipitation data 308 is generated from the limited ground data 304 and the corresponding LR satellite data 302. The combined upsampled precipitation data 308 may be generated by, e.g., upsampling the LR satellite data 302 to have a higher resolution than the LR satellite data 302 (while still having LR quality) and/or applying an inverse distance weighting algorithm to combine the limited ground data 304 with the upsampled LR satellite data. In an example implementation of the inverse distance weighting algorithm, each pixel location's precipitation value is updated based on the weighted mean precipitation values of nearby limited ground observations, e.g., according to $updatedValue = \frac{\sum w_i z_i}{\sum w_i}$. In the foregoing formula, $z_i$ is the precipitation value of ground observation i and $w_i$ is the distance between the ground observation and the location whose value is being updated.

At block 310, noise is added to the combined upsampled precipitation data 308. Adding noise to the combined upsampled precipitation data 308 may include adding Gaussian noise to the combined upsampled precipitation data 308. Noise may be added iteratively over *T* frames in some embodiments.

After adding noise at block 310, the downscale model 102 receives the noisy combined precipitation data and de-noises it to generate a predicted downscaled residual. The noisy combined precipitation data may be de-noised iteratively over $T$ frames in some embodiments, e.g., by successively de-noising each frame (starting with the combined upsampled precipitation data 308) until the $T$th frame. Various example frames 312A-312J that may be generated in the de-noising process and that may correspond to the example frame 302A are depicted in FIG. 3A, with the last example frame 312J being the predicted downscaled residual in an example in which the LR satellite data 302 includes the frame 302A. While ten example frames 312A-312J are depicted in FIG. 3A, suggesting that $T$ may be 10, more generally $T$ may be any number of frames, such as 100 frames or any other number of frames.

Following generation of the predicted downscaled residual by the downscale model 102, the process flow 300 may include combining the predicted downscaled residual with the combined upsampled precipitation data 308, for example, by adding the predicted downscaled residual to the combined upsampled precipitation data 308. Combining the predicted downscaled residual with the combined upsampled precipitation data 308 generates a HR precipitation estimate 314 for the target geographic region. In the foregoing manner, downscaling 316 may be applied to downscale the LR satellite data 302 (and specific frames thereof, such as the frame 302A) to thereby generate HR precipitation estimates 314. A frame 314A is depicted in FIG. 3A that is an example of the HR precipitation estimates 514 derived from the frame 302A of the LR satellite data 302.

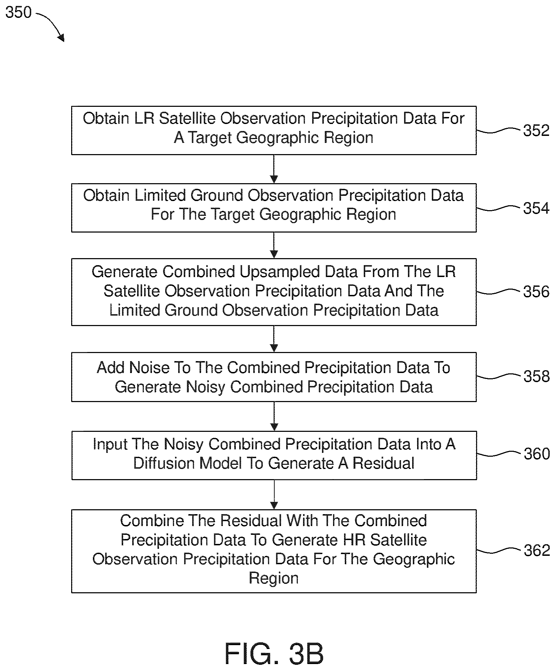

FIG. 3B illustrates a flowchart of an example method 350 to downscale satellite data in accordance with one or more embodiments of the present disclosure. The method 350 may include some or all of the process flow 300 of FIG. 3A. The method 350 may be performed or controlled by any suitable system, apparatus, or device. For example, the method 350 may be implemented in the system 100 using the downscale model 104 of FIG. 1 and/or using the computing system of FIG. 12. Alternatively or additionally, the method 350 may be embodied in computer-readable instructions stored on a computer-readable storage medium, the computer-readable instructions executable by a processor to perform or control performance of the method 350. The method 350 may include one or more of blocks 352, 354, 356, 358, 360, and/or 362. Although illustrated with discrete blocks, the steps and operations associated with one or more blocks of the method 350 may be divided into additional blocks, combined into fewer blocks, or eliminated, depending on the particular implementation. For example, one or more of the operations described above with respect to the process flow 300 of FIG. 3A, the process flow 200 of FIG. 2A, and/or the method 250 of FIG. 2B may be performed as part of the method 350 of FIG. 3B.

At block 352, the method 350 may include obtaining LR satellite data for a target geographic region. The target geographic region may include, e.g., the target geographic region 108 of FIG. 1. Block 352 may be followed by block 354.

At block 354, the method 350 may include obtaining limited ground data for the target geographic region. The limited ground data for the target geographic region may include rain gauge data from one or more rain gauges within the target geographic region. Block 354 may be followed by block 356.

At block 356, the method 350 may include generating combined upsampled precipitation data from the LR satellite data and the limited ground data. Generating the combined upsampled precipitation data from the LR satellite data and the limited ground data may include upsampling the LR satellite data and applying an inverse distance weighting algorithm to combine the limited ground data with the upsampled LR satellite data. Upsampling the LR satellite data may include upsampling the LR satellite data from 10 km resolution to 1 km resolution. Block 356 may be followed by block 358.

At block 358, the method 350 may include adding noise to the combined upsampled precipitation data to generate noisy combined upsampled precipitation data. Adding noise at block 358 may include iteratively adding noise, e.g., $T$ times. Block 358 may be followed by block 360.

At block 360, the method 350 may include inputting the noisy combined upsampled precipitation data into a diffusion model to generate a predicted residual. The diffusion model may generate the predicted residual by de-noising the noisy combined upsampled precipitation data. The diffusion model may be or include the downscale model 102 of FIG. 1, for instance. Alternatively or additionally, the diffusion model may include a U-Net architecture. Block 360 may be followed by block 362.

At block 362, the method 350 may include combining the predicted residual with the combined upsampled precipitation data to generate a HR precipitation estimate for the target geographic region. Combining the predicted residual with the combined upsampled precipitation data may include adding the predicted residual to the combined upsampled precipitation data. The HR precipitation estimate may be used as input for at least one of a hydrological model, a weather forecasting model, an early warning system for extreme weather events, or an agricultural planning system.

In some embodiments, the method 350 may further include training the diffusion model, including some or all of the method 250 of FIG. 2B. For instance, training the diffusion model may include one or more of the following. HR ground data and corresponding LR satellite data for a training geographic region that is different than the target geographic region may be obtained. The LR satellite data may be upsampled to generate upsampled satellite data, the upsampled satellite data having a same resolution as the corresponding HR ground data. Training residuals may be generated from the HR ground data and the LR satellite data. Noise may be added to the training residuals. The diffusion model may be trained to denoise the noisy training residuals, e.g., using a weighted MSE loss function.

In some embodiments, the LR satellite data includes bias-corrected LR satellite data and the method 350 further includes, prior to generating the combined upsampled precipitation data, generating the bias-corrected LR satellite data.

Generating the bias-corrected LR satellite data may include inputting non-bias-corrected LR satellite data into a bias correction diffusion model (such as the bias correction model 104 of FIG. 1) to generate a bias correction residual and combining the bias correction residual with the non-bias-corrected LR satellite data to produce the bias-corrected LR satellite data. In this and other embodiments, prior to generating the bias-corrected LR satellite data, the method 350 may further include training the bias correction diffusion model. Training the bias correction diffusion model may include training the bias correction diffusion model using past satellite data and past ground data for a training geographic region that is different than the target geographic region. Training the bias correction diffusion model may further include fine-tuning the bias correction diffusion model using past satellite data and past limited ground data for the target geographic region.

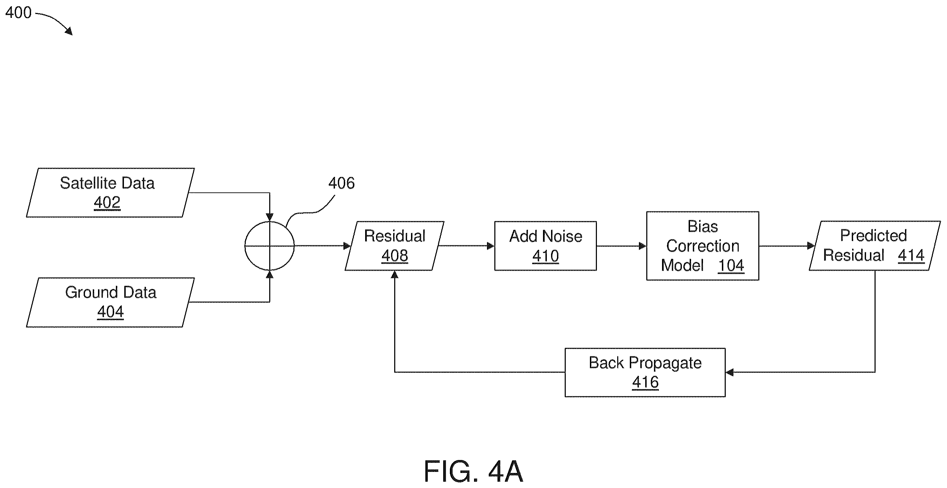

FIG. 4A illustrates an example process flow 400 to train the bias correction model 104, or more generally a diffusion regression model, for satellite data bias correction in accordance with one or more embodiments of the present disclosure. The process flow 400 may be implemented on or by a computing system, such as the computing system of FIG. 12, using a diffusion regression model (such as the bias correction model 104). The process flow 400 begins with satellite data 402 and corresponding ground data 404 having a same resolution as the satellite data 402 for a training geographic region, such as the training geographic region 106 of FIG. 1. The satellite data 402 and the ground data 404 may be obtained from, respectively, one or more of the weather satellites 110 and the weather radar 112 and may be for the training geographic region 105 of FIG. 1. The ground data 404 may include HR ground data, e.g., from the weather radar 112 of FIG. 1, that has been coarsened (e.g., downsampled) to match the resolution of the satellite data 402. The coarsening of the HR ground data may involve maximum value interpolation to preserve precipitation intensity in the ground data 404. Alternatively or additionally, limited ground data may be obtained from one or more rain gauges in the training geographic region and may be used in the process flow 400.

At 406, a training residual 408 is generated from the ground data 404 and the corresponding satellite data 402. Each training residual 408 may be generated by subtracting the satellite data 402 for a given location (e.g., the training geographic region) and time from the ground data 404 for the given location and time or by subtracting the ground data 404 for the given location and time from the satellite data 402 for the given location and time. The subtraction may occur on a pixel-by-pixel basis.

At block 410, noise is added to the training residual 408. Adding noise to the training residual 408 may include adding Gaussian noise to the training residual 408. Noise may be added iteratively over T frames in some embodiments.

After adding noise at block 410, the bias correction model 104 (or more generally, a diffusion regression model) receives the noisy training residual and de-noises it to generate a predicted residual 414. The noisy training residual may be de-noised iteratively over T frames in some embodiments.

At block 416, back propagation is performed using a loss or error function to adjust learnable or model parameters of the bias correction model 104. The learnable parameters may include or be included in, e.g., the transition kernel of the forward or reverse process as described above.

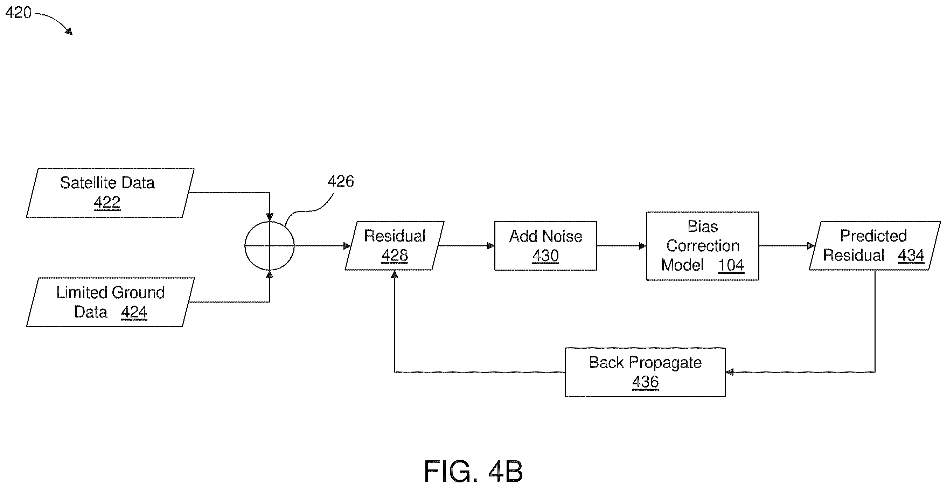

FIG. 4B illustrates an example process flow 420 to fine-tune the bias correction model 104, or more generally a pretrained diffusion regression model, for satellite data bias correction in accordance with one or more embodiments of the present disclosure. The process flow 420 may be implemented on or by a computing system, such as the computing system of FIG. 12, using a diffusion regression model (such as the bias correction model 104). The process flow 420 begins with satellite data 422 and corresponding limited ground data 424 for a target geographic region, such as the target geographic region 108 of FIG. 1. The satellite data 422 and the limited ground data 424 may be obtained from, respectively, one or more of the weather satellites 110 and one or more of the rain gauges 114 and may be for the target geographic region 108 of FIG. 1.

At 426, a training residual 428 is generated from the satellite data 422 and the corresponding limited ground data 424. Each training residual 428 may be generated by subtracting the satellite data 422 for a given location (e.g., the target geographic region) and time from the limited ground data 424 for the given location and time or by subtracting the limited ground data 424 for the given location and time from the satellite data 422 for the given location and time. The subtraction may occur on a pixel-by-pixel basis.

At block 430, noise is added to the training residual 428. Adding noise to the training residual 428 may include adding Gaussian noise to the training residual 428. Noise may be added iteratively over T frames in some embodiments.

After adding noise at block 430, the bias correction model 104 (or more generally, a pretrained diffusion regression model, e.g., the bias correction model 104 after completing the training process flow 400 of FIG. 4A) receives the noisy training residual and de-noises it to generate a predicted residual 434. The noisy training residual may be de-noised iteratively over T frames in some embodiments.

At block 436, back propagation is performed using a loss or error function to adjust learnable or model parameters of the bias correction model 104. The learnable parameters may include or be included in, e.g., the transition kernel of the forward or reverse process as described above.

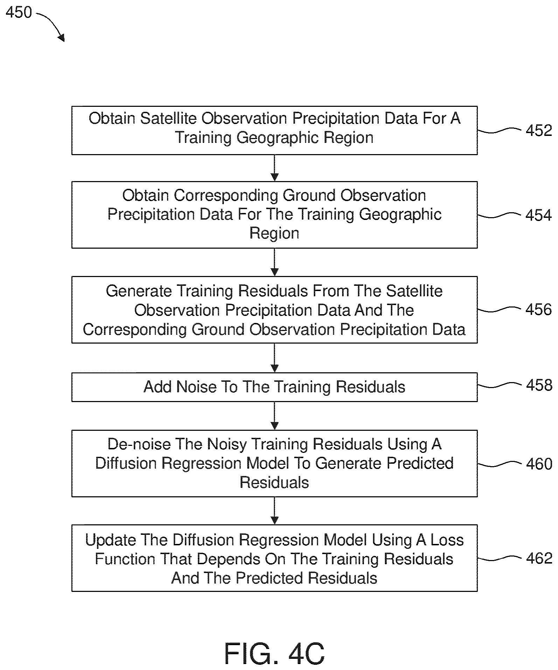

FIG. 4C illustrates a flowchart of an example method 450 to train the bias correction model 104, or more generally a diffusion regression model, for satellite data bias correction in accordance with one or more embodiments of the present disclosure. The method 450 may include some or all of the process flows 400, 420 of FIG. 4A or 4B. The method 450 may be performed or controlled by any suitable system, apparatus, or device. For example, the method 450 may be implemented in the system 100 using the bias correction model 104 of FIG. 1 and/or using the computing system of FIG. 12. Alternatively or additionally, the method 450 may be embodied in computer-readable instructions stored on a computer-readable storage medium, the computer-readable instructions executable by a processor to perform or control performance of the method 450. The method 450 may include one or more of blocks 452, 454, 456, 458, 460, and/or 462. Although illustrated with discrete blocks, the steps and operations associated with one or more blocks of the method 450 may be divided into additional blocks, combined into fewer blocks, or eliminated, depending on the particular implementation. For example, one or more of the operations described above with respect to the process flow 400 of FIG. 4A, the process flow 420 of FIG. 4B, the process flow 300 of FIG. 3A, the process flow 200 of FIG. 2A, the method 350 of FIG. 3B, and/or the method 250 of FIG. 2B may be performed as part of the method 450 of FIG. 4C.

At block 452, the method 450 may include obtaining satellite observation precipitation data for a training geographic region, such as the training geographic region 106 of FIG. 1. Block 452 may be followed by block 454.

At block 454, the method 450 may include obtaining ground observation precipitation data for the training geographic region. The ground data may have a same resolution as the satellite data. For example, the ground data may include HR ground data that has been coarsened to match the resolution of the satellite data. The coarsening of the HR ground data may involve maximum value interpolation to preserve precipitation intensity in the ground data. The ground data may correspond to the satellite data in that both may be for the same given geographic region (e.g., the training geographic region 106) and time. Block 454 may be followed by block 456.

At block 456, the method 450 may include generating training residuals from the satellite data and the corresponding ground data. Generating the training residuals from the satellite data and the corresponding ground data at block 456 may include, for each training residual, subtracting the satellite data for a given location and time from the ground data for the given location and time or subtracting the ground data for the given location and time from the satellite data for the given location and time. Block 456 may be followed by block 458.

At block 458, the method 450 may include adding noise to the training residuals. Adding noise at block 458 may include iteratively adding noise, e.g., $T$ times. Block 458 may be followed by block 460.

At block 460, the method 450 may include de-noising the noisy training residuals using a diffusion regression model to generate predicted residuals. The diffusion regression model may be or include the bias correction model 104 of FIG. 1, for instance. Block 460 may be followed by block 462.

At block 462, the method 450 may include updating the diffusion regression model using a loss function that depends on the training residuals and the predicted residuals. The loss function may include a weighted MSE loss function and updating the diffusion model using the loss function may include backpropagating loss using the weighted MSE loss function. As an example, the weighted MSE loss function may be defined according to equation 4 as described above, or using some other weighted MSE loss function.

In some embodiments, backpropagating loss, e.g., as part of block 462, may include one or more of the following for each training residual and corresponding predicted residual. For example, an error value may be calculated based on the training residual and the corresponding predicted residual. The contribution of each of multiple learnable parameters of the diffusion model to the error value may be determined. The learnable parameters may be updated, e.g., incrementally adjusted, based on the weighted MSE loss function.

The method 450 may further include fine-tuning the diffusion regression model for a target geographic region that is different than the training geographic region using past satellite data for the target geographic region and past limited ground data for the target geographic region, such as described with respect to FIG. 4B. The past limited ground data for the target geographic region may include past rain gauge data from one or more rain gauges within the target geographic region.

Fine-tuning the diffusion regression model may include one or more of the following. Satellite data for the target geographic region may be obtained. Corresponding limited ground data for the target geographic region may be obtained. Second training residuals may be generated from the satellite data for the target geographic region and the corresponding limited ground data for the target geographic region. Noise may be added to the second training residuals. The noisy second training residuals may be de-noised using the diffusion regression model to generate second predicted residuals. The diffusion regression model may be updated using the loss function that depends on the second training residuals and the second predicted residuals.

Alternatively or additionally, the method 450 may further include bias correcting new satellite data for the target geographic region using the fine-tuned diffusion regression model and new limited ground data for the target geographic region. In some embodiments, bias correcting the new satellite data includes inputting combined precipitation data into the diffusion regression model to generate a bias correction residual. The combined precipitation data may be generated from the new satellite data and the new limited ground data. Bias correcting the new satellite data may further include combining the bias correction residual with the combined precipitation data to produce bias-corrected satellite observation precipitation data for the target geographic region. The method may further include generating the combined precipitation data from the new satellite data and the new limited ground data, which in some embodiments may include applying an inverse distance weighting algorithm to combine the new satellite data with the new limited ground data.

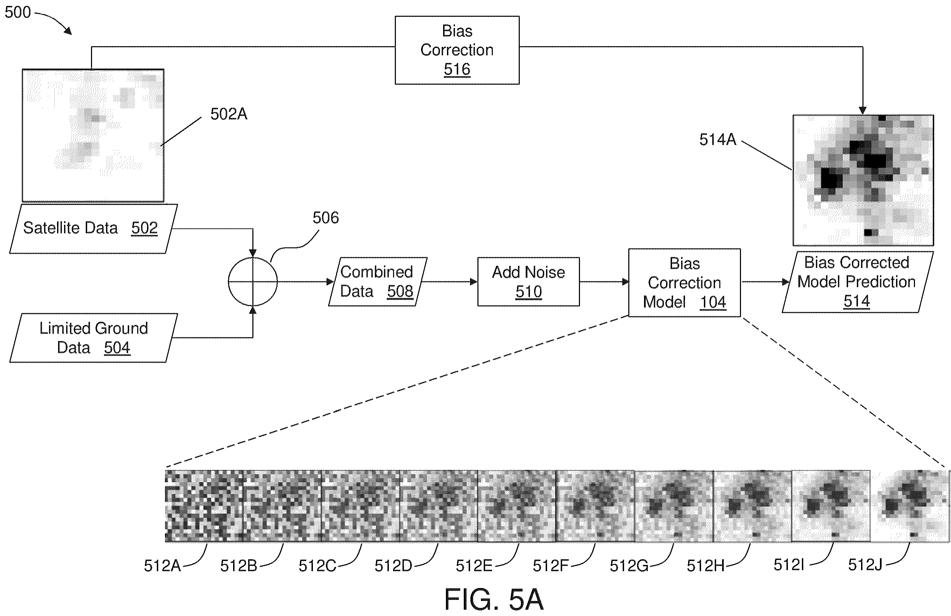

FIG. 5A illustrates an example process flow 500 to bias correct satellite data in accordance with one or more embodiments of the present disclosure. The process flow 500 may be implemented on or by a computing system, such as the computing system of FIG. 12, using a diffusion regression model (such as the bias correction model 104). The process flow 500 begins with satellite data 502 and corresponding limited ground data 504 for a target geographic region. For example, the satellite data 502 and the limited ground data 504 may be obtained from, respectively, one or more of the weather satellites 110 and the rain gauge(s) 114 and may be for the target geographic region 108 of FIG. 1. FIG. 5A depicts an example frame 502A of the satellite data 502.

At 506, combined precipitation data 508 is generated from the limited ground data 504 and the corresponding satellite data 502. The combined precipitation data 508 may be generated by, e.g., applying an inverse distance weighting algorithm to combine the limited ground data 504 with the satellite data 502. In an example implementation of the inverse distance weighting algorithm, each pixel location's precipitation value is updated based on the weighted mean precipitation values of nearby limited ground observations, e.g., according to $updatedValue = \frac{\sum w_i z_i}{\sum w_i}$. In the foregoing formula, $z_i$ is the precipitation value of ground observation $i$ and $w_i$ is the distance between the ground observation and the location whose value is being updated.

At block 510, noise is added to the combined precipitation data 508. Adding noise to the combined precipitation data 508 may include adding Gaussian noise to the combined precipitation data 508. Noise may be added iteratively over $T$ frames in some embodiments.

After adding noise at block 510, the bias correction model 104 receives the noisy combined precipitation data and de-noises it to generate a bias correction residual. The noisy combined precipitation data may be de-noised iteratively over $T$ frames in some embodiments, e.g., by successively de-noising each frame (starting with the combined precipitation data 508) until the Tth frame. Various example frames 512A-512J that may be generated in the de-noising process and that may correspond to the example frame 502A are depicted in FIG. 5A, with the last example frame 512J being the bias correction residual in an example in which the satellite data 502 includes the frame 502A. While ten example frames 512A-512J are depicted in FIG. 5A, suggesting that $T$ may be 10, more generally $T$ may be any number of frames, such as 100 frames or any other number of frames.

Following generation of the bias correction residual by the bias correction model 104, the process flow 500 may include combining the bias correction residual with the combined precipitation data 508, for example, by adding the bias correction residual to the combined precipitation data 508. Combining the bias correction residual with the combined precipitation data 508 generates bias-corrected satellite data 514 for the target geographic region. In the foregoing manner, bias correction 516 may be applied to bias correct the satellite data 502 (and specific frames thereof, such as the frame 502A) to thereby generate bias-corrected satellite data 514. A frame 514A is depicted in FIG. 5A that is an example of the bias-corrected satellite data 514 derived from the frame 502A of the satellite data 302.

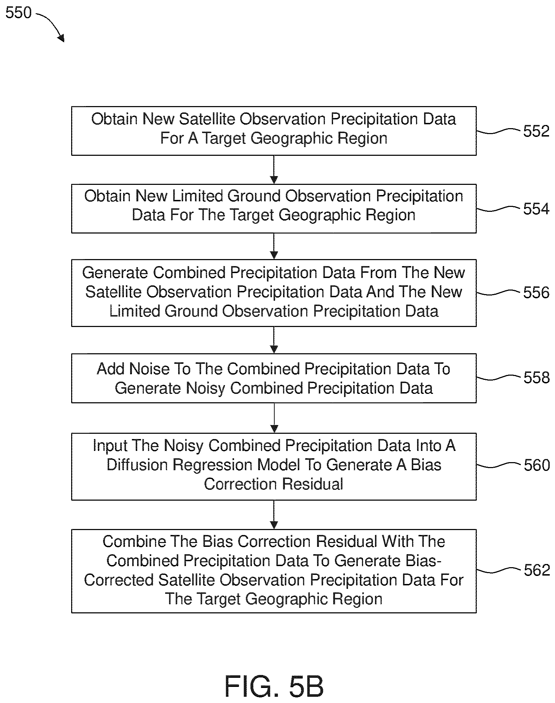

FIG. 5B illustrates a flowchart of an example method 550 to bias correct satellite data in accordance with one or more embodiments of the present disclosure. The method 540 may include some or all of the process flow 500 of FIG. 5A. The method 540 may be performed or controlled by any suitable system, apparatus, or device. For example, the method 540 may be implemented in the system 100 using the downscale model 104 of FIG. 1 and/or using the computing system of FIG. 12. Alternatively or additionally, the method 540 may be embodied in computer-readable instructions stored on a computer-readable storage medium, the computer-readable instructions executable by a processor to perform or control performance of the method 540. The method 540 may include one or more of blocks 552, 554, 556, 558, 560, and/or 562. Although illustrated with discrete blocks, the steps and operations associated with one or more blocks of the method 550 may be divided into additional blocks, combined into fewer blocks, or eliminated, depending on the particular implementation. For example, one or more of the operations described above with respect to the process flow 500 of FIG. 5A, the process flow 400 of FIG. 4A, the process flow 420 of FIG. 4B, the process flow 300 of FIG. 3A, the process flow 200 of FIG. 2A, the method 450 of FIG. 4C, the method 350 of FIG. 3B, and/or the method 250 of FIG. 2B may be performed as part of the method 550 of FIG. 5B.

At block 552, the method 550 may include obtaining new satellite data for a target geographic region. The target geographic region may include, e.g., the target geographic region 108 of FIG. 1. Block 552 may be followed by block 554.

At block 554, the method 550 may include obtaining new limited ground data for the target geographic region. The new limited ground data for the target geographic region may include rain gauge data from one or more rain gauges within the target geographic region. Block 554 may be followed by block 556.

At block 556, the method 550 may include generating combined precipitation data from the new satellite data and the new limited ground data. Generating the combined precipitation data from the new satellite data and the new limited ground data may include applying an inverse distance weighting algorithm to combine the new limited ground data with the new satellite data. Block 556 may be followed by block 558.

At block 558, the method 550 may include adding noise to the combined precipitation data to generate noisy combined precipitation data. Adding noise at block 558 may include iteratively adding noise, e.g., T times. Block 558 may be followed by block 560.

At block 550, the method 550 may include inputting the noisy combined precipitation data into a diffusion regression model to generate a bias correction residual. The diffusion regression model may generate the bias correction residual by de-noising the noisy combined precipitation data. The diffusion regression model may be or include the bias correction model 104 of FIG. 1, for instance. Alternatively or additionally, the diffusion regression model may include a U-Net architecture. Block 560 may be followed by block 562.

At block 562, the method 550 may include combining the bias correction residual with the combined precipitation data to generate bias-corrected satellite data for the target geographic region. Combining the bias correction residual with the combined precipitation data may include adding the bias correction residual to the combined precipitation data. The bias-corrected satellite data may be used as input for a diffusion model, such as the downscale model 102, or other model.

In some embodiments, the method 550 may further include training the diffusion regression model, including some or all of the method 450 of FIG. 4C. For instance, training the diffusion regression model may include, at a high level, training the diffusion regression model using satellite data for a training geographic region and ground data for the training geographic region, the satellite data and the ground data having a same resolution. As another example, training the diffusion regression model may include one or more of the following. Satellite data for the training geographic region may be obtained. Ground data for the training geographic region may be obtained. Training residuals may be generated from the satellite data and the ground data. Noise may be added to the training residuals. The noisy training residuals may be de-noised using the diffusion regression model to generate predicted residuals.

Alternatively or additionally, after training the diffusion regression model, the method 550 may further include fine-tuning the trained diffusion regression model using past satellite data for the target geographic region and past limited ground data for the target geographic region.

In some embodiments, the method 550 may further include downscaling the bias-corrected satellite data for the target geographic region (generated at block 562) using a downscale model and the new limited ground data for the target geographic region. Downscaling the bias-corrected satellite data for the target geographic region using the downscale model and the new limited ground observation precipitation data may include one or more of the following. Combined upsampled precipitation data may be input into the downscale model to generate a downscaled residual, the second combined precipitation data generated from the bias-corrected satellite observation precipitation data and the new limited ground observation precipitation data. The downscaled residual and the combined upsampled precipitation data may be combined to produce a HR precipitation estimate for the target geographic region.

Accordingly, some embodiments herein may involve a method to downscale satellite data from 10 km to 1 km resolution. The trained downscale model may be applied to regions with little to no known ground observations, such as limited ground data from rain gauges. The downscale model may be location specific (on the order of city size) and thus the downscale model may require far less computational resources to train and infer in contrast to other known methodologies.

Alternatively or additionally, some embodiments herein may involve a method that reduces biases in satellite data. Such embodiments may leverage diffusion models and may correct the satellite data taking rain gauge data into account. The bias correction model may be location specific (on the order of city size) and thus the bias correction model may require far less computational resources to train and infer in contrast to other known methodologies.

Three experiment using variants of the foregoing embodiments will now be discussed. In the experiments, data obtained from the Multi-Radar Multi-Sensor (MRMS) system was used as the ground data and IMERG data was used as the satellite data. In the experimental training of the downscale model (e.g., the downscale model 102), see FIGS. 2A-2B, interpolated LR MRMS data (ground data) was used in the training process flow 200 instead of upsampled LR satellite data 208. In addition, in the experimental training of the bias correction model (e.g., the bias correction model 104), see FIGS. 4A-4C, the interpolated LR MRMS data (ground data) used to train the downscale model was also used to train the bias correction model.

The experiments focused on the Seattle region, characterized by frequent rain events. IMERG data and MRMS data for the 2022 and 2023 calendar years was used. To focus on rain events, data samples with a low proportion of rain were filtered out, specifically those where the proportion of zero precipitation values within the selected region was below 0.5. This resulted in approximately 1600 data samples. The dataset was then randomly split into training (90%) and testing (10%) sets. The following three experiments were designed to evaluate the effectiveness of the diffusion model approach described herein for correction and downscaling tasks: correction task, downscaling task, and unified correction and downscaling task.

In the bias correction task, the target is the residual between the original IMERG (satellite) data and the coarsened (LR) MRMS (ground) data. The input (conditioning image) is the original IMERG data.

In the downscaling task, the target is the residual between the LR MRMS data and the original (HR) MRMS data. The input (conditioning image) is the LR MRMS data.

The unified correction and downscaling task simulates a real-world application scenario. First, the IMERG data was bias corrected using the trained bias correction model. Then, the bias corrected IMERG data was used as input to the trained downscale model. Finally, the resulting downscaled IMERG product was compared with the original HR MRMS data to evaluate the overall effectiveness of the framework herein.

The bias correction model was trained on 20x20 pixel image patches using a 3-block U-Net with latent channels of (32, 64, 128) while the downscale model was trained on 184x200 pixel images (corresponding to the 1 km resolution target) using a 4-block U-Net with latent channels of (128, 256, 256, 512). Both models were trained for 2000 epochs with a learning rate of 2e-4 and a batch size of 16, distributed across two Quadro RTX 8000 GPUs. Total training time was approximately 10 hours. In comparison, a somewhat analogous methodology described by NVIDIA under the name CorrDiff (2022) required a total training time of about 7 days, far in excess of the ~10 hours to train the bias correction and downscale models of the three experiments described herein. This represents a significant computing improvement over CorrDiff and other existing methodologies.

The bias correction model herein was compared to a supervised Swin2SR model (Conde, M. V.; Choi, U.-J.; Burchi, M.; and Timofte, R. 2022. Swin2sr: Swinv2 transformer for compressed image superresolution and restoration. In European Conference on Computer Vission, 669-687. Springer.) to assess the effectiveness of the approach herein against a state-of-the-art supervised method. The Swin2SR model was trained with the same configuration and a comparable number of trainable parameters as the bias correction diffusion model, using original IMERG data as input and LR MRMS data as the target.

During inference (e.g., FIGS. 3A-3B, 5A-5B), the second-order EDM stochastic sampler proposed by Karras was employed to sample the residual. See Karras, T.; Aittala, M.; Aila, T.; and Laine, S. 2022. Elucidating the design space of diffusion-based generative models. Advances in neural information processing systems, 35: 26565-26577. The bias correction model first generated a residual, which was added to the original IMERG data to produce the bias corrected IMERG product. This bias corrected product then served as input to the downscale model, which generated a second residual. Adding this second residual to the corrected IMERG data yielded the final downscaled (and bias corrected) IMERG product. Both models utilized 25 steps to solve the reverse stochastic differential equation (SDE) process during inference.

The bias correction and downscale models were evaluated using four metrics: Root Mean Squared Error (RMSE), Continuous Ranked Probability Score (CRPS), Pearson Correlation Coefficient (CC), and Structural Similarity Index Measure (SSIM).

The RMSE measures overall performance and the magnitude of errors.

The CRPS is equivalent to Mean Absolute Error (MAE) for deterministic predictions, assessing overall accuracy. Comparing RMSE and CRPS helps determine if the model primarily improves extreme values (lower RMSE) or general pixel values.

The Pearson CC evaluates the linear relationship between predictions and ground truth, assessing the model's ability to capture overall precipitation patterns.

The SSIM measures the similarity of image structures, assessing the model's ability to reproduce spatial details.

The results of the three experiments will now be discussed in turn.

The goal of bias correction is to calibrate satellite observations to a scale comparable with ground-based radar data. Directly applying a diffusion model from IMERG to MRMS proved challenging due to consistent biases between these operational datasets. Therefore, this experiment focused on predicting LR MRMS data from IMERG data. Initially, a Swin2SR model (Mardani et al. 2024) was used for bias correction. While this supervised approach yielded promising metrics, the predictions were overly smooth, resulting in the loss of distinct storm shapes. To address this, the residual diffusion model for bias correction described for this experiment was employed and is referred to herein as PrecipDiff. As shown in Table 1, the bias correction model herein outperforms both the Swin2SR model and bicubic linear interpolation across all met.

**Table 1**

| Method | RMSE | CRPS | CC | SSIM |
|---|---|---|---|---|
| Bicubic LR | 3.7087 | 1.9914 | 0.4593 | **0.5222** |
| Swin2SR | 2.2842 | 1.8493 | **0.5685** | 0.3418 |
| PrecipDiff | **1.7969** | **1.2464** | 0.4961 | 0.3772 |

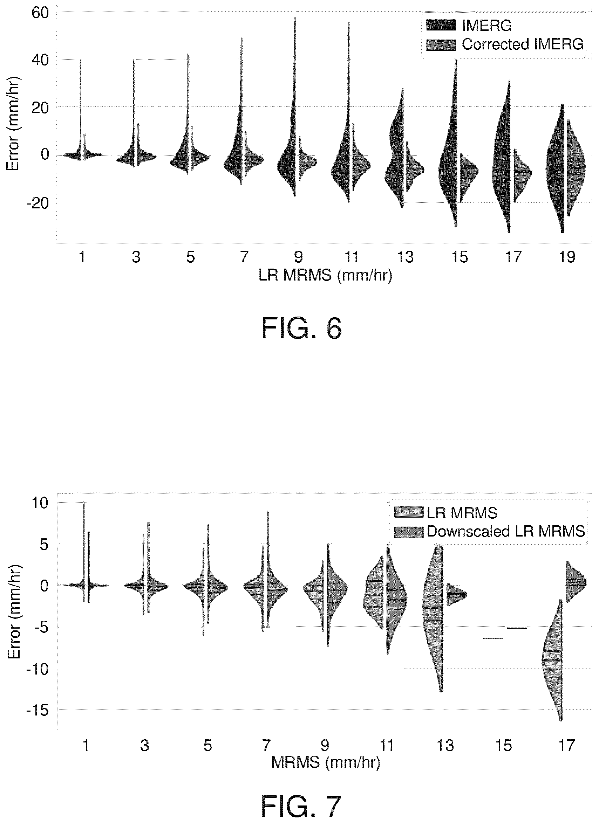

FIG. 6 compares error distributions of the original and corrected IMERG data relative to LR MRMS data in accordance with one or more embodiments of the present disclosure. IMERG tends to overestimate lower precipitation values and underestimate higher values. The corrected predictions effectively mitigate the overestimation issue and reduce variation in higher values, although improvements in underestimation are limited.

Experimentation was also done with correcting IMERG data at high resolution by interpolating IMERG and using the residuals between the interpolated data and HR MRMS for training. However, this approach yielded suboptimal results due to the abundance of zero-value pixels in HR MRMS data, which led the model to produce unrealistically low precipitation values.

To evaluate the downscaling performance independently of distribution shifts, an experiment was conducted to downscale LR MRMS to HR MRMS. This experiment aimed to assess the downscale model's ability to add fine-scale details to LR data. Table 2 demonstrates significant improvements across all metrics for the downscale model compared to linear regression.

**Table 2**

| Method | RMSE | CRPS | CC | SSIM |
|---|---|---|---|---|
| LinearRegression | 0.8642 | 0.5999 | 0.9347 | 0.7378 |
| PrecipDiff | **0.4543** | **0.2685** | **0.9386** | **0.8249** |

FIG. 7 compares the error distributions of LR MRMS and downscaled MRMS relative to HR MRMS in accordance with one or more embodiments of the present disclosure. To simulate real-world scenarios where precise ground truth values are unavailable at every location, nearby pixels within the LR pixel area were randomly sampled. The results show that the downscaled predictions herein exhibit errors tightly centered around zero, indicating high accuracy, while LR MRMS shows a wider error distribution.

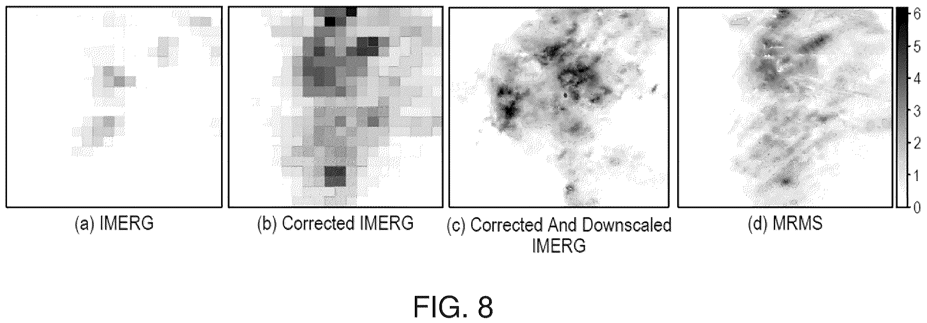

To evaluate the combined performance of the framework herein, both the bias correction and downscale models were applied sequentially to downscale IMERG data to the resolution of MRMS observations. FIG. 8 illustrates the results, showcasing detailed cloud-like formations and precipitation patterns captured in accordance with one or more embodiments of the present disclosure. Notably, the bias correction model may play a role in providing a more accurate foundation for downscaling.

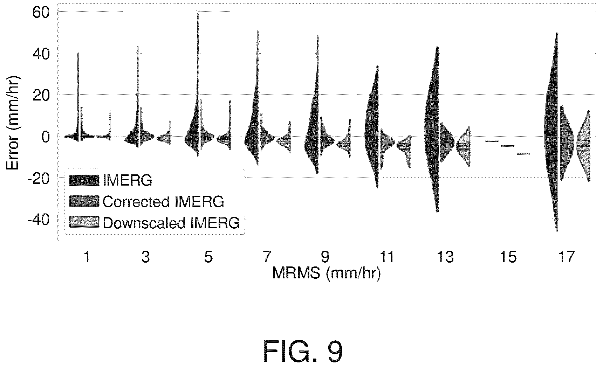

FIG. 9 compares the error distributions of IMERG, bias corrected IMERG, and downscaled IMERG relative to MRMS data in accordance with one or more embodiments of the present disclosure. Bias corrected IMERG significantly reduced bias and variation across all precipitation intensities. Downscaled IMERG performed particularly well at lower precipitation values, effectively refining details and capturing subtle variations. However, the increased number of zero-value pixels in the downscaled product led to some underestimation at higher precipitation intensities.

Table 3 highlights that the downscaled IMERG product exhibits the highest similarity to MRMS data in terms of SSIM, RMSE, and CRPS, indicating its suitability for both visual interpretation and numerical weather modeling applications.

**Table 3**

| Data Compared with MRMS | RMSE | CRPS | CC | SSIM |
|---|---|---|---|---|
| IMERG | 3.3410 | 1.7264 | 0.5417 | 0.6344 |
| Corrected IMERG | 1.3597 | 0.9701 | **0.6615** | 0.5736 |
| Corrected and Downscaled IMERG | **1.0846** | **0.7432** | 0.6426 | **0.5766** |

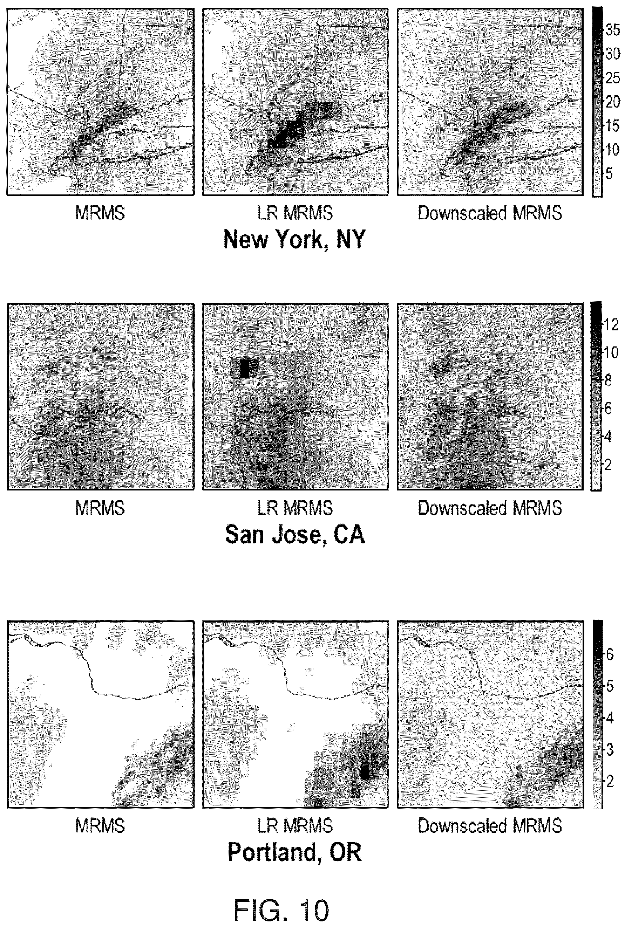

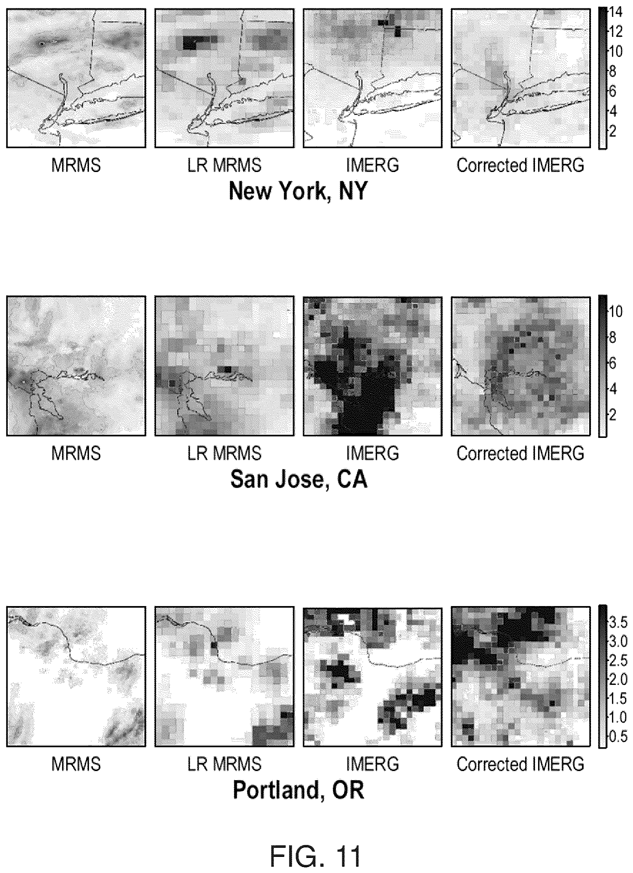

To assess the generalizability of the bias correction and downscale models herein, they were applied to data from three additional cities in the United States: New York, Portland, and San Jose. FIG. 10 shows results of the application of the downscale model trained using data from Seattle to data from, respectively, New York, San Jose, and Portland in accordance with one or more embodiments of the present disclosure. FIG. 11 shows results of the application of the bias correction model trained using data from Seattle to data from, respectively, New York, San Jose, and Portland in accordance with one or more embodiments of the present disclosure.

As illustrated in FIG. 10, the downscale model effectively reproduced fine-scale details in these new regions, indicating good generalization capabilities. As illustrated in FIG. 11, the bias correction model's performance was less consistent, likely due to regional variations in precipitation characteristics and the influence of local rain gauge data assimilation in the IMERG and MRMS products.

Some embodiments herein involve purely computer vision methods to enhance precipitation data. Precipitation is a complex variable to work with. This is partly due to the fact that it is sparsely spatially distributed compared to other meteorological variables, like temperature and wind direction. In particular, precipitation is a result of meteorological interactions. Due to such features, it is compelling to see if neural networks can learn the underlying mechanisms. Directly predicting precipitation can be ineffective due to its sparsity. Models tend to underestimate actual values and struggle to preserve the original data due to its stochastic nature. This limitation is evident in our experiments with the bias correction model which works in low resolution and demonstrates success due to the reduced sparsity.

The inherent uncertainty in precipitation distributions poses a challenge for traditional synthesis methods that rely on Gaussian distribution in effectively capturing the skewness. To overcome this, embodiments herein learn the residuals between the target and input. This is because the inventors recognized that the residuals exhibit less skewed distributions compared to the original precipitation variables. Consequently, the diffusion model can concentrate on generating fine-scale precipitation details rather than reconstructing the entire sample. However, this approach assumes the availability of a LR data that accurately represents the large-scale statistical properties corresponding to the HR data. This highlights the role of the bias correction model, especially when working with operational datasets like IMERG, and MRMS. With these datasets, challenges were encountered stemming from the observational biases inherent to different instruments and various data processing algorithms. These factors introduced regional variations in data distributions, even though both datasets aim to estimate the same variable.

Some embodiment herein involve a novel framework leveraging diffusion models and residual learning to address the critical need for accurate, HR precipitation data, particularly in regions with limited ground-based monitoring. Embodiments herein may effectively tackle two key challenges: correcting biases in SPPs and downscaling SPP estimates to finer resolutions. The disclosed embodiments demonstrate substantial improvements in accuracy, bias reduction, and spatial detail, both as independent tasks and as a unified framework.

An innovation of some embodiments herein is the reliance solely on precipitation data, demonstrating the potential of purely data-driven computer vision techniques for enhancing SPPs. This has implications for data-scarce regions heavily reliant on satellite observations for applications like disaster preparedness and water resource management. As best understood, embodiments herein are the first to apply diffusion models exclusively to operational precipitation datasets and for bias correction of SPPs.

FIG. 12 illustrates a block diagram of an example computing system 1200, according to at least one embodiment of the present disclosure. The computing system 1200 may be configured to implement or direct one or more suitable operations described in the present disclosure. For example, the computing system 1200 may be configured to perform one or more blocks, operations, or acts of any of the process flows or methods herein. The computing system 1200 may include a processor 1250, a memory 1252, and a data storage 1254. The processor 1250, the memory 1252, and the data storage 1254 may be communicatively coupled.

In general, the processor 1250 may include any suitable special-purpose or general-purpose computer, computing entity, or processing device including various computer hardware or software modules and may be configured to execute instructions stored on any applicable computer-readable storage media. For example, the processor 1250 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data. Although illustrated as a single processor in FIG. 5, the processor 1250 may include any number of processors configured to, individually or collectively, perform or direct performance of any number of operations described in the present disclosure. Additionally, one or more of the processors may be present on one or more different electronic devices, such as different servers.

In some embodiments, the processor 1250 may be configured to interpret and/or execute program instructions and/or process data stored in the memory 1252, the data storage 1254, or the memory 1252 and the data storage 1254. In some embodiments, the processor 1250 may fetch program instructions from the data storage 1254 and load the program instructions in the memory 1252. After the program instructions are loaded into memory 1252, the processor 1250 may execute the program instructions.

The memory 1252 and the data storage 1254 may include computer-readable storage media for carrying or having computer-executable instructions or data structures stored thereon. By way of example, and not limitation, such computer-readable storage media may include tangible or non-transitory computer-readable storage media including Random Access Memory

(RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other non-transitory storage medium which may be used to carry or store particular program code in the form of computer-executable instructions or data structures and which may be accessed by a general-purpose or special-purpose computer. In these and other embodiments, the term "non-transitory" as explained in the present disclosure should be construed to exclude only those types of transitory media that were found to fall outside the scope of patentable subject matter in the Federal Circuit decision of In re Nuijten, 1200 F.3d 1346 (Fed. Cir. 2007).

Combinations of the above may also be included within the scope of computer-readable storage media. Computer-executable instructions may include, for example, instructions and data configured to cause the processor 1250 to perform a certain operation or group of operations.

Modifications, additions, or omissions may be made to the computing system 1200 without departing from the scope of the present disclosure. For example, in some embodiments, the computing system 1200 may include any number of other components that may not be explicitly illustrated or described.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, it may be recognized that changes may be made in form and detail without departing from the scope of the present disclosure. Thus, the present disclosure is limited only by the claims.

In some embodiments, the different components, modules, engines, and services described herein may be implemented as objects or processes that execute on a computing system (e.g., as separate threads). While some of the systems and methods described herein are generally described as being implemented in software (stored on and/or executed by general purpose hardware), specific hardware implementations or a combination of software and specific hardware implementations are also possible and contemplated.

In accordance with common practice, the various features illustrated in the drawings may not be drawn to scale. The illustrations presented in the present disclosure are not meant to be actual views of any particular apparatus (e.g., device, system, etc.) or method, but are merely idealized representations that are employed to describe various embodiments of the disclosure. Accordingly, the dimensions of the various features may be arbitrarily expanded or reduced for clarity. In addition, some of the drawings may be simplified for clarity. Thus, the drawings may not depict all of the components of a given apparatus (e.g., device) or all operations of a particular method.

Terms used herein and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, it is understood that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc. For example, the use of the term "and/or" is intended to be construed in this manner.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

Additionally, the use of the terms "first," "second," "third," etc., are not necessarily used herein to connote a specific order or number of elements. Generally, the terms "first," "second," "third," etc., are used to distinguish between different elements as generic identifiers. Absence a showing that the terms "first," "second," "third," etc., connote a specific order, these terms should not be understood to connote a specific order. Furthermore, absence a showing that the terms first," "second," "third," etc., connote a specific number of elements, these terms should not be understood to connote a specific number of elements. For example, a first widget may be described as having a first side and a second widget may be described as having a second side. The use of the term "second side" with respect to the second widget may be to distinguish such side of the second widget from the "first side" of the first widget and not to connote that the second widget has two sides.

All examples and conditional language recited herein are intended for pedagogical objects to aid the reader in understanding the invention and the concepts contributed by the inventor to furthering the art and are to be construed as being without limitation to such specifically recited examples and conditions. Although embodiments of the present disclosure have been described in detail, it should be understood that the various changes, substitutions, and alterations could be made hereto without departing from the spirit and scope of the present disclosure.

## Claims

1. A method to train a diffusion model for satellite observation precipitation data downscaling, the method comprising:

obtaining high-resolution (HR) ground observation precipitation data that has a first resolution;

obtaining corresponding low-resolution (LR) satellite observation precipitation data that has a second resolution lower than the first resolution;

upsampling the LR satellite observation precipitation data that has the second resolution to generate upsampled satellite observation precipitation data that has the first resolution;

generating training residuals from the HR ground observation precipitation data and the corresponding upsampled satellite observation precipitation data;

adding noise to the training residuals;

de-noising the noisy training residuals using a diffusion model to generate predicted residuals; and

updating the diffusion model using a loss function that depends on the training residuals and the predicted residuals.

2. The method of claim 1, wherein the diffusion model comprises an equivariant diffusion model (EDM).

3. The method of claim 1, wherein updating the diffusion model using the loss function comprises backpropagating loss using a weighted mean square error (MSE) loss function.

4. The method of claim 3, wherein backpropagating loss comprises, for each training residual and corresponding predicted residual:

   based on the training residual and the corresponding predicted residual, calculating an error value for the corresponding predicted residual using the weighted MSE loss function; and

   updating learnable parameters of the diffusion model based on the weighted MSE loss function.

5. The method of claim 3, wherein:

   the weighted MSE loss function, *weightedMSE,* comprises: $weightedMSE = \frac{1}{n}\sum_{i=1}^{n} \alpha_i (y_i - \widehat{y_i})^{\wedge}2$

   $n$ is a number of predicted values in a given predicted residual;

   $\alpha$ is a weighting factor;

   $i$ is an index from 1 to $n$;

   $y$ is a given observed value in a given training residual that corresponds to the given predicted residual; and

   $\widehat{y}$ is a given predicted value in the given predicted residual that corresponds to the given observed value $y$.

6. The method of claim 1, wherein generating the training residuals based on the HR ground observation precipitation data and the corresponding upsampled satellite observation precipitation data comprises, for each training residual, subtracting the upsampled satellite observation precipitation data for a given location and time from the HR ground observation precipitation data for the given location and time.

7. The method of claim 1, wherein the HR ground observation precipitation data and the LR satellite observation precipitation data used to train the diffusion model correspond to a training geographic region, the method further comprising downscaling satellite observation precipitation data corresponding to a target geographic region that is different from the training geographic region using the trained diffusion model.

8. The method of claim 7, wherein downscaling the satellite observation precipitation data comprises:

   inputting noisy combined upsampled precipitation data of the target geographic region into the diffusion model to generate a predicted downscaled residual, the noisy combined upsampled precipitation data generated from LR satellite observation precipitation data for the target geographic region and limited ground observation precipitation data for the target geographic region; and

   combining the predicted downscaled residual with the upsampled combined precipitation data to produce a HR precipitation estimate for the target geographic region.

9. The method of claim 8, wherein the LR satellite observation precipitation data for the target geographic region comprises bias-corrected LR satellite observation precipitation data for the target geographic region, the method further comprising, prior to inputting the noisy combined upsampled precipitation data of the target geographic region into the diffusion model, generating the bias-corrected LR satellite observation precipitation data for the target geographic region, including:

inputting non-bias-corrected LR satellite observation precipitation data for the target geographic region into a bias correction diffusion model to generate a predicted bias correction residual; and

combining the predicted bias correction residual with the non-bias-corrected LR satellite observation precipitation data for the target geographic region to produce the bias-corrected LR satellite observation precipitation data for the target geographic region.

10. A non-transitory computer-readable storage medium comprising computer-readable instructions that are executable by a processor to perform or control performance of the method of claim 1.

11. A method of downscaling satellite observation precipitation data, comprising:

obtaining low-resolution (LR) satellite observation precipitation data for a target geographic region;
obtaining limited ground observation precipitation data for the target geographic region;
generating combined upsampled precipitation data from the LR satellite observation precipitation data and the limited ground observation precipitation data;
adding noise to the combined upsampled precipitation data to generate noisy combined upsampled precipitation data;
inputting the noisy combined upsampled precipitation data into a diffusion model to generate a predicted residual; and
combining the predicted residual with the combined upsampled precipitation data to generate a high-resolution (HR) precipitation estimate for the target geographic region.

12. The method of claim 11, wherein generating the combined upsampled precipitation data from the LR satellite observation precipitation data and the limited ground observation precipitation data comprises upsampling the LR satellite observation precipitation data and applying an inverse distance weighting algorithm to combine the limited ground observation precipitation data with the upsampled LR satellite observation precipitation data.

13. The method of claim 11, wherein the diffusion model comprises an equivariant diffusion model (EDM).

14. The method of claim 11, further comprising training the diffusion model, including:

obtaining HR ground observation precipitation data and corresponding LR satellite observation precipitation data for a training geographic region that is different than the target geographic region;
upsampling the LR satellite observation precipitation data to generate upsampled satellite observation precipitation data, the upsampled satellite observation precipitation data having a same resolution as the corresponding HR ground observation precipitation data;
generating training residuals from the HR ground observation precipitation data and the LR satellite observation precipitation data;
adding noise to the training residuals; and
training the diffusion model to denoise the noisy training residuals.

15. The method of claim 11, wherein the LR satellite observation precipitation data comprises bias-corrected LR satellite observation precipitation data, the method further comprising, prior to generating the combined upsampled precipitation data, generating the bias-corrected LR satellite observation precipitation data, including:

inputting non-bias-corrected LR satellite observation precipitation data into a bias correction diffusion model to generate a bias correction residual; and
combining the bias correction residual with the non-bias-corrected LR satellite observation precipitation data to produce the bias-corrected LR satellite observation precipitation data.

16. The method of claim 15, further comprising, prior to generating the bias-corrected LR satellite observation precipitation data, training the bias correction diffusion model, including:

training the bias correction diffusion model using past satellite observation precipitation data and past ground observation precipitation data for a training geographic region that is different than the target geographic region; and
fine-tuning the bias correction diffusion model using past satellite observation precipitation data and past limited ground observation precipitation data for the target geographic region.

**17.** The method of claim 11, wherein the diffusion model comprises a U-Net architecture.

**18.** The method of claim 11, wherein generating the combined upsampled precipitation data from the LR satellite observation precipitation data and the limited ground observation precipitation data comprises:

upsampling the LR satellite observation precipitation data from 10 kilometer (km) resolution to 1 km resolution; and
combining the upsampled LR satellite observation precipitation data and the limited ground observation precipitation data.

**19.** The method of claim 11, wherein the limited ground observation precipitation data for the target geographic region comprises rain gauge precipitation data from one or more rain gauges within the target geographic region.

**20.** A non-transitory computer-readable storage medium comprising computer-readable instructions that are executable by a processor to perform or control performance of the method of claim 11.

FIG. 1

FIG. 2A

250

Obtain HR Ground Observation Precipitation Data That Has A First Resolution — 252

Obtain Corresponding LR Satellite Observation Precipitation Data That Has A Second Resolution Lower Than The First Resolution — 254

Upsample The LR Satellite Observation Precipitation Data That Has The Second Resolution To Generate Upsampled Satellite Observation Precipitation Data That Has The First Resolution — 256

Generate Training Residuals From The HR Ground Observation Precipitation Data And The Corresponding Upsampled Satellite Observation Precipitation Data — 258

Add Noise To The Training Residuals — 260

De-noise The Noisy Training Residuals Using A Diffusion Model To Generate Predicted Residuals — 262

Update The Diffusion Model Using A Loss Function That Depends On The Training Residuals And The Predicted Residuals — 264

FIG. 2B

**FIG. 3A**

350

Obtain LR Satellite Observation Precipitation Data For A Target Geographic Region — 352

Obtain Limited Ground Observation Precipitation Data For The Target Geographic Region — 354

Generate Combined Upsampled Data From The LR Satellite Observation Precipitation Data And The Limited Ground Observation Precipitation Data — 356

Add Noise To The Combined Precipitation Data To Generate Noisy Combined Precipitation Data — 358

Input The Noisy Combined Precipitation Data Into A Diffusion Model To Generate A Residual — 360

Combine The Residual With The Combined Precipitation Data To Generate HR Satellite Observation Precipitation Data For The Geographic Region — 362

FIG. 3B

400

Satellite Data
402

Ground Data
404

406

Residual
408

Add Noise
410

Bias
Correction
Model 104

Predicted
Residual 414

Back Propagate
416

FIG. 4A

420

426

Satellite Data
422

Limited Ground
Data   424

Residual
428

Add Noise
430

Bias
Correction
Model   104

Predicted
Residual   434

Back Propagate
436

FIG. 4B

26

450

Obtain Satellite Observation Precipitation Data For A Training Geographic Region — 452

Obtain Corresponding Ground Observation Precipitation Data For The Training Geographic Region — 454

Generate Training Residuals From The Satellite Observation Precipitation Data And The Corresponding Ground Observation Precipitation Data — 456

Add Noise To The Training Residuals — 458

De-noise The Noisy Training Residuals Using A Diffusion Regression Model To Generate Predicted Residuals — 460

Update The Diffusion Regression Model Using A Loss Function That Depends On The Training Residuals And The Predicted Residuals — 462

FIG. 4C

FIG. 5A

550

```
┌─────────────────────────────────────────────────┐
│ Obtain New Satellite Observation Precipitation Data │─── 552
│           For A Target Geographic Region          │
└─────────────────────────────────────────────────┘
                        │
                        ▼
┌─────────────────────────────────────────────────┐
│ Obtain New Limited Ground Observation Precipitation │─── 554
│       Data For The Target Geographic Region       │
└─────────────────────────────────────────────────┘
                        │
                        ▼
┌─────────────────────────────────────────────────┐
│ Generate Combined Precipitation Data From The New  │
│ Satellite Observation Precipitation Data And The New│─── 556
│      Limited Ground Observation Precipitation Data │
└─────────────────────────────────────────────────┘
                        │
                        ▼
┌─────────────────────────────────────────────────┐
│ Add Noise To The Combined Precipitation Data To    │─── 558
│    Generate Noisy Combined Precipitation Data      │
└─────────────────────────────────────────────────┘
                        │
                        ▼
┌─────────────────────────────────────────────────┐
│ Input The Noisy Combined Precipitation Data Into A │
│ Diffusion Regression Model To Generate A Bias       │─── 560
│             Correction Residual                    │
└─────────────────────────────────────────────────┘
                        │
                        ▼
┌─────────────────────────────────────────────────┐
│ Combine The Bias Correction Residual With The      │
│ Combined Precipitation Data To Generate Bias-       │
│ Corrected Satellite Observation Precipitation Data For│─── 562
│           The Target Geographic Region            │
└─────────────────────────────────────────────────┘
```

FIG. 5B

FIG. 6

FIG. 7

(a) IMERG    (b) Corrected IMERG    (c) Corrected And Downscaled IMERG    (d) MRMS

FIG. 8

FIG. 9

MRMS | LR MRMS | Downscaled MRMS

**New York, NY**

MRMS | LR MRMS | Downscaled MRMS

**San Jose, CA**

MRMS | LR MRMS | Downscaled MRMS

**Portland, OR**

FIG. 10

MRMS          LR MRMS          IMERG          Corrected IMERG

**New York, NY**

MRMS          LR MRMS          IMERG          Corrected IMERG

**San Jose, CA**

MRMS          LR MRMS          IMERG          Corrected IMERG

**Portland, OR**

FIG. 11

Computing System
1200

Processor
1250

Memory
1252

Data Storage
1254

FIG. 12

**EUROPEAN SEARCH REPORT**

Application Number

EP 25 21 1309

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CLEMENT GUILLOTEAU ET AL: "A Generative Diffusion Model for Probabilistic Ensembles of Precipitation Maps Conditioned on Multisensor Satellite Observations", ARXIV.ORG, CORNELL UNIVERSITY LIBRARY, 201 OLIN LIBRARY CORNELL UNIVERSITY ITHACA, NY 14853, 18 September 2024 (2024-09-18), XP091889876, * abstract * * the whole document * | 1-20 | INV. G01W1/14 |
| A | HUGHES ET AL: "Comparison of satellite rainfall data with observations from gauging station networks", JOURNAL OF HYDROLOGY, ELSEVIER, AMSTERDAM, NL, vol. 327, no. 3-4, 20 August 2006 (2006-08-20), pages 399-410, XP028044777, ISSN: 0022-1694, DOI: 10.1016/J.JHYDROL.2005.11.041 [retrieved on 2006-08-20] * abstract * * the whole document * | 1-20 | |

TECHNICAL FIELDS SEARCHED (IPC)

G01W

The present search report has been drawn up for all claims

| Place of search | Date of completion of the search | Examiner |
|---|---|---|
| The Hague | 3 March 2026 | Bagnera, Carlo |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Swin2sr: Swinv2 transformer for compressed image superresolution and restoration. **CONDE, M. V.** ; **CHOI, U.-J.** ; **BURCHI, M.** ; **TIMOFTE, R.** European Conference on Computer Vission. Springer, 2022, 669-687

- **KARRAS, T.** ; **AITTALA, M.** ; **AILA, T.** ; **LAINE, S.** Elucidating the design space of diffusion-based generative models. *Advances in neural information processing systems*, 2022, vol. 35, 26565-26577